# EUROPÄISCHE PATENTANMELDUNG

(11) **EP 0 989 160 A1**
(43) Veröffentlichungstag der Anmeldung: **29.03.2000**
(21) Anmeldenummer: 99118359.1
(22) Anmeldetag: 16.09.1999
(51) Int. Cl.: C08K 3/04, C08K 3/30, C08K 9/02, C09K 21/02

(54) **Flammschutzmittel**

(30) Priorität: 23.09.1998 DE 19843595
(71) Anmelder: Metallgesellschaft Aktiengesellschaft, 60325 Frankfurt am Main (DE)
(72) Erfinder: Uhlenbroich, Theodor, Dr., 47269 Duisburg (DE); Amirzadeh-Asl, Djamschid, Dr., 47445 Moers (DE)

(57) **Zusammenfassung**

Ein Flammschutzmittel zur Einarbeitung in synthetische Polymere besteht aus 1 - 99 Gew.% expandierbarem Graphit und 1 - 99 Gew.% Zinksulfid.

## Beschreibung

Die Erfindung betrifft Flammschutzmittel zur Einarbeitung in synthetische Polymere.

Es ist bekannt, zur Erzielung flammwidrigen Verhaltens synthetischer Polymere bereits bei deren Herstellung diesen Flammschutz-Additive zuzufügen, wobei die Flammschutz-Additive mit den sonstigen Eigenschaften der synthetischen Polymere vereinbar sein müssen. Die zum Einsatz in Polymeren als Flammschutz-Additive herangezogenen Halogenverbindungen wirken so, daß die bei erhöhter Temperatur freigesetzen Halogenatome durch Abfangen der die Verbrennung unterhaltenden Radikale die Kettenreaktion abbrechen. Die Halogenverbindungen werden i.a. zusammen mit Antimontrioxid angewendet. Die halogenierten Flammschutz-Additive belasten jedoch bei der Verbrennung die Atmosphäre und/oder bilden persistente Rückstände. Darüber hinaus wird vermutet, daß Antimontrioxid carzinogene Wirkung aufweist (Römpps Chemie Lexikon; Stuttgart: Franckh, 8. Auflage 1997, Seiten 240, 1302, 1303). Die Fachwelt ist deshalb bestrebt, die Halogenverbindungen und Antimontrioxid ganz oder teilweise zu substituieren.

Die US-A-4 111 905 beschreibt eine flammenhemmende halogenhaltige Polymerzusammensetzung, die Zinksulfid sowie eine Komponente, ausgewählt aus einer Gruppe, bestehend aus Magnesiumhydroxid, Calziumhydroxid, Bariumsulfat und hydratisiertem Aluminiumoxid, enthält.

In der DE-C-28 000 747 ist eine flammenhemmnde und raucharme Polymerzusammensetzung beschrieben, die aus einem halogenhaltigen Polymer oder einem halogenfreien Polymer und einer halogenhaltigen organischen Verbindung besteht und der als Mittel zur Flammhemmung und Rauchunterdrückung Zinksulfid zugesetzt ist.

In neuerer Zeit ist sog. expandierbarer Graphit (EG) als Flammschutz-Additiv bekannt geworden (Z. Kunststoffe 87, 1997, Seiten 1004 - 1006, Karl Hanser Verlag, München), bei dem in die Schichtgitterstruktur von grobkristallinem Flockengraphit Säuren, wie z.B. Schwefelsäure eingelagert ist. Je nach Temperaturbelastung dehnt sich der expandierbare Graphit mehr oder weniger aus. Bei einer Temperatur von 400°C expandiert der Graphit bis zum 250-fachen seines Ausgangsvolumens, wodurch im Brandfall die Flammen erstickt werden. Expandierbarer Graphit wird heute bereits in PU-Schaumstoffen, in Dichtungsmassen, Kabelabschottungen und Brandschutzmanschetten zur Abschottung von Rohren eingesetzt. Kombinationen mit herkömmlichen Flammschutzmitteln, wie Metalloxiden oder Verbindungen auf Phosphorbasis sind möglich (Firmenschrift der Fumio Okisaki, Tosoh Corporation, Yokkaichi, Japan; Flamecut Grep Series, New non-halogenated flame-retardant systems).

Anknüpfend an den vorstehend beschriebenen Stand der Technik ist es die Aufgabe der vorliegende Erfindung ein Flammschutzmittel zur Weiterverarbeitung in synthetischen Polymeren zu schaffen, das keine Halogenverbindungen enthält und mit dem ein vollständiger Austausch von Antimontrioxid in synthetischen Polymeren möglich ist.

Die Lösung dieser Aufgabe besteht in einer pulverförmigen Mischung aus 1 bis 99 Gew.% expandierbarem Graphit und 1 bis 99 Gew.% Zinksulfid, vorzugsweise aus 10 - 90 Gew.% expandierbarem Graphit und 10 - 90 Gew.% Zinksulfid.

Für die Dispergierung dieser Mischung in synthetischen Polymeren hat sich eine mittlere Korngröße d₅₀ von < 0,5 mm als ausgesprochen günstig erwiesen.

In Hinblick auf eine optimale Anwendung des erfindungsgemäß zusammengesetzten Flammschutzmittels, ist insbesondere der Einsatz von Masterbatches geeignet, die aus 10 - 30 Gew.% expandierbarem Graphit, 10 - 30 Gew.% Zinksulfid und 10 - 50 Gew.% synthetischem Polymerem bestehen.

Der Einsatz von Masterbatches ermöglicht ein konstantes Mischungsverhältnis zwischen dem Flammschutzmittel und dem zu verarbeitenden synthetischen Polymer. Das erlaubt auch eine kontinuierliche, volumetrische oder gravimetrische Dosierung von Masterbatches und ungefüllten Material.

Die Masterbatches liegen in Form eines Granulats mit einer mittleren Korngrößen d₅₀ von 0,5 - 5 mm vor.

Selbstverständlich ist es auch möglich, Pulvermischungen zu verwenden.

Unter dem Begriff 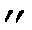 synthetisches Polymer" sind vorzugsweise alle Thermoplaste, Duomere, Elastomere und Thermoelastomere zu verstehen.

Die Erfindung ist nachstehend durch meherere Ausführungsbeispiele näher erläutert.

Mittels einer Spritzgießmaschine vom Typ Arburg Allrounder 220-90-350 werden Normprüfkörper aus LDPE bei einem Temperaturprofil von 160 - 200°C erzeugt.

Auf einem 2-Walzen-Stuhl wird Weich-PVC mit 30 Gew.% Weichmacheranteil (DOP) bei einer Temperatur von ca. 140°C 5 min lang gewalzt. Die gebildeten Walzfelle werden von der Walze abgezogen und zu Preßplatten geformt, aus denen Prüfkörper herausgesägt werden. Für die Prüfkörper wird der Sauerstoff-Index (LOI) nach DIN 22 117E in % O₂, d. h. der minimale Sauerstoffbedarf eines Gasgemisches, in dem ein Prüfkörper kerzenartig brennt, bestimmt. Dazu werden die Prüfkörper wird in einem Glaszylinder fixiert und einem definierten Sauerstoff-Stickstoff-Gasstrom ausgesetzt. Durch Variationen des Mischungsverhältnis wird die Sauerstoffkonzentration ermittelt, bei der der Prüfkörper gerade noch brennt.

Die an den Prüfkörpern ermittelten Ergebnisse sind in Tabelle I und Tabelle II dargestellt.

Gemäß Tabelle I werden unterschiedliche Mengen an Zinksulfid und/oder expandierbarem Graphit mit einer Korngröße d₅₀ von 300 µm mit Weich-PVC-Pulver in einem Chargenmischer (Fa. Henschel) 5 Minuten lang intensiv gemischt. Die homogenisierte Mischung wird mittels eines 2-Walzen-Stuhls (Fa. Leistritz) bei einer Temperatur von 140°C gewalzt und das Walzfell bei einer Temperatur von 140°C von der Walze abgezogen. Ergänzend werden Prüfkörper aus Weich-PVC, die frei von Flammschutzmittel sind, untersucht.

Für die in Tabelle II wiedergegebenen Untersuchungsergebnisse werden unterschiedliche Mengen an Zinksulfid und/oder expandierbarem Graphit mit Polyether in Chargenmischer intensiv 5 Minuten lang gemischt. Die homogenisierte Mischung wird mittels eines Doppelschneckenextruders bei einer Temperatur von 200°C extrudiert und aus dem Extrudat bei einer Temperatur von 200 - 220°C die Prüfkörper erzeugt. Zusätzlich werden Prüfkörper aus flammschutzmittelfreiem Polyethylen getestet.

Eine Bewertung der in den Tabellen dargestellten Versuchsergebnisse zeigt, daß durch den Einsatz von expandierbarem Graphit eine Verbesserung des Sauerstoff-Index in Abhängikeit von der Konzentration erreicht wird. Eine besonders deutliche Steigerung des Sauerstoff-Index tritt jedoch dann ein, wenn eine erfindungsgemäße zusammengesetzte Mischung aus expandierbarem Graphit und Zinksulfid als Flammschutzmittel eingearbeitet ist.

**Tabelle I**

| **Probenbezeichnung** | **LOI [%O**_{**2**}**]** |
|---|---|
| W-PVC ohne Flammschutzadditiv | 24,0 |
| 5 % Sa HD-S in W-PVC | 24,0 |
| 10 % Sa HD-S in W-PVC | 24,0 |
| 5 % EG in W-PVC | 26,0 |
| 10 % ED in W-PVC | 27,5 |
| 2,5 % Sa HD-S/2,5 EG in W-PVC | 25,5 |
| 5 % Sa HD-S/5 % EG in W-PVC | 27,0 |
| W-PVC = Weich-PVC Sa HD-S = ZnS EG = expandierbarer Graphit | |

**Tabelle II**

| **Probenbezeichnung** | **LOI [%O**_{**2**}**]** |
|---|---|
| LDPE ohne Flammschutzadditiv | 16,5 |
| 2,5 % EG in LDPE | 18,5 |
| 5 % EG in LDPE | 19,0 |
| 10 % EG in LDPE | 21,5 |
| 2,5 % EG/2,5 % Sa HD-S in LDPE | 19,0 |
| 5 % EG/5 % Sa HD-S in LDPE | 20,5 |
| 10 % EG/10 % Sa HD-S in LDPE | 23,0 |
| LDPE = Polyethylen Sa HD-S = ZnS EG = expandierbarer Graphit | |

## Patentansprüche

1. Flammschutzmittel zur Einarbeitung in synthetische Polymere, bestehend aus einer pulverförmigen Mischung aus 1 - 99 Gew.% expandierbarem Graphit und 1 - 99 Gew.% Zinksulfid.

2. Flammschutzmittel nach Anspruch 1, bestehend aus 10 bis 90 Gew.% expandierbarem Graphit und 10 bis 90 Gew.% Zinksulfid.

3. Flammschutzmittel nach einem der Ansprüche 1 und 2, bestehend aus einem Pulver mit einer mittleren Korngröße d₅₀ von 0,5 mm.

4. Flammschutzmittel zur Einarbeitung in synthetische Polymere, bestehend aus einem Masterbatch aus 10 - 30 Gew.% expandierbarem Graphit, 10 - 30 Gew.% Zinksulfid und 10 - 50 Gew.% synthetischem Polymer.

5. Flammschutzmittel nach Anspruch 3, bestehend aus einem gleichförmigen Granulat mit einer mittleren Korngröße d₅₀ von 0,5 bis 5 mm.

6. Flammschutzmittel nach Anspruch 3, bestehend aus einem Pulver.
